Europäisches Patentamt

European Patent Office

Office européen des brevets

(19)

(11) Veröffentlichungsnummer : **0 381 957 B1**

## (12) EUROPÄISCHE PATENTSCHRIFT

(45) Veröffentlichungstag der Patentschrift :
**28.10.92 Patentblatt 92/44**

(51) Int. Cl.$^5$ : **B60T 8/60**

(21) Anmeldenummer : **90100876.3**

(22) Anmeldetag : **17.01.90**

(54) **Blockiergeschützte Bremsanlage mit Giermomentbegrenzung.**

(30) Priorität : **07.02.89 DE 3903585**

(43) Veröffentlichungstag der Anmeldung :
**16.08.90 Patentblatt 90/33**

(45) Bekanntmachung des Hinweises auf die
Patenterteilung :
**28.10.92 Patentblatt 92/44**

(84) Benannte Vertragsstaaten :
**AT CH DE FR GB IT LI NL SE**

(56) Entgegenhaltungen :
**EP-A- 0 122 570**
**EP-A- 0 235 515**
**DE-A- 2 826 295**
**DE-A- 2 851 107**

(73) Patentinhaber : **KNORR-BREMSE AG**
**Moosacher Strasse 80 Postfach 401060**
**W-8000 München 40 (DE)**

(72) Erfinder : **Mayer-Fröhlich, Mathias**
**Egenhoferstrasse 14**
**W-8000 München 60 (DE)**
Erfinder : **Utzt, Alfred**
**Am Drudenbogen 10**
**W-8080 Fürstenfeldbruck (DE)**

## Beschreibung

Die Erfindung bezieht sich auf eine blockiergeschützte Bremsanlage mit Giermomentbegrenzung gemäß dem Oberbegriff des Patentanspruches 1.

Verzögert ein Fahrzeug bei aktiver Blockierschutzregelung unter unterschiedlichen Haftwertbedingungen für die linken und rechten Fahrzeugräder, so ergibt sich bei einer radweisen Individualregelung des Blockierschutzes ein unterschiedliches Bremsdruckniveau zwischen den Fahrzeugrädern auf dem "guten" Haftwert und den Fahrzeugrädern auf dem "schlechten" Haftwert. Diese Bremsdruckdifferenz erzeugt ein Giermoment, das zu einem Ausbrechen des Fahrzeuges führen kann. Dieses Giermoment kann man nur dann vollständig vermeiden, wenn man nach der sog. "select-low-Methode" den Bremsdruck desjenigen Rades, das sich auf dem schlechten Haftwert befindet, als Führungsgröße für die Regelung der übrigen Räder verwendet. Hierdurch würde jedoch der Bremsweg verlängert, da nur der schlechtere Haftwert ausgenützt wird, während die mögliche Bremskraft des Rades auf dem besseren Haftwert "verschenkt" wird.

Man läßt daher in der Praxis unterschiedliche, ein Giermoment erzeugende Bremsdrücke zu. Eine derartige Bremsanlage ist beispielsweise aus der EP-A-0 235 515 bekannt. Hierbei ist eine Blockierschutzregelung vorgesehen, welche aus Sensorsignalen der beiden Räder einer Fahrzeugachse über Auswerteschaltungen Betätigungssignale für jeweils ein Einlaß- und ein Auslaßventil für den Bremsdruck eines jeden er beiden Räder bildet. Zur Giermomentbegrenzung sind weitere Schaltkreisorgane vorgesehen, welche bei Auftreten von Blockiergefahr oder - vorgänge an einem der Räder anzeigenden Betätigungssignalen ein Steigern des Bremsdruckes am anderen Rad unterbinden; erst bei nachfolgendem gepulstem Bremsdruckanstieg am zuvor blockiergefährdeten Rad ist ein ebenfalls gepulster Bremsdruckanstieg am anderen Rad möglich. Bei dieser Bremsanlage ist des weiteren ein Sensor für Fahrzeugquerbeschleunigungen vorgesehen, vermittels welchem während Kurvenfahrten die Giermomentbegrenzung abgeschaltet wird. Diese bekannte Bremsanlage weist jedoch keinerlei Sicherung auf, welche ein Anwachsen der Differenz zwischen den Bremsdrücken der beiden Räder auf bestimmte Grenzdrücke begrenzen könnte, es können sich daher sehr hohe Giermomente entwickeln.

Zum Ausschließen eines Anwachsens der Differenz der Bremsdrücke auf unerwünscht hohe Werte ist es des weiteren bekannt, diese Differenz der Bremsdrücke zwischen linkem und rechtem Vorderrad eines Fahrzeuges auf einen vorgegebenen Wert zu begrenzen.

Die Begrenzung der Druckdifferenz setzt voraus, daß man die tatsächlich in den Bremszylindern herrschenden Drücke kennt. Hierzu ist es beispielsweise bekannt, die Bremszylinder von !echtem und linkem Vorderrad durch eine Bremsmittelleitung zu verbinden, in welche ein federvorgespanntes Entlastungsventil eingesetzt ist. Überschreitet die Differenz der beiden Drücke einen durch die Federvorspannung festgelegten Wert, so öffnet dieses Entlastungsventil, so daß der höhere Druck abgebaut wird. Diese Lösung ist jedoch mechanisch aufwendig.

Auch wäre es theoretisch möglich, die jeweiligen Bremsdrücke mittels elektro-mechanischen Druck-Spannungswandlern zu messen und dann mit elektronischen Mitteln den zulässigen Differenzdruck einzustellen. Auch eine solche Lösung ist aufgrund der erforderlichen Meßeinrichtungen aufwendig. Darüber hinaus sind solche Meßeinrichtungen recht störanfällig.

Für blockiergeschützte Bremsanlagen ist es aus der DE-A 2 826 295 bekannt, einen Funktionsgenerator bzw. Schaltkreis vorzusehen, dessem Eingang ein Signal zugeführt wird, das die Stellung des die Druckbeaufschlagung des überwachten Radbremszylinders steuernden Ventils repräsentiert, wobei der Funktionsgenerator aus dem zeitlichen Verlauf dieses Signals unter Berücksichtigung weiterer, zeitliche Verzögerungen bedingender Faktoren nach einer vorgegebenen Funktion ein dem Bremsdruck in den Radbremszylindern entsprechendes Ausgangssignal erzeugt, welches den jeweiligen Istwert des Bremszylinderdruckes repräsentiert. Es könnte naheliegen, derartige Funktionsgeneratoren bzw. Schaltkreise anstelle der vorerwähnten elektromechanischen Druck-Spannungswandler zu verwenden.

Aufgabe der Erfindung ist es daher, eine zuverlässige und ohne zusätzliche mechanische Teile arbeitende blockiergeschützte Bremsanlage mit Giermomentbegrenzung zu schaffen.

Diese Aufgabe wird durch die im kennzeichnenden Teil des Patentanspruches 1 angegebenen Merkmale gelöst. Vorteilhafte Ausgestaltungen und Weiterbildungen der Erfindung sind den Unteransprüchen zu entnehmen.

Der Grundgedanke der Erfindung liegt darin, eine Bezugsgröße für den tatsächlichen Bremsdruck in den einzelnen Radbremszylindern dadurch mit rein elektronischen Mitteln zu erzeugen, daß ein Funktionsgenerator beispielsweise an sich bekannter Art verwendet wird, der aus den Ventilstellungen und deren zeitlichen Verlauf ein den tatsächlichen Bremsdruck repräsentierendes Signal erzeugt. Je nach den Ventilstellungen "Belüften" bzw, "Druckaufbau", "Druckhalten" oder "Entlüften" bzw. "Druckabbau" wird diese Bezugsgröße gemäß einer vorzugsweise nichtlinearen Funkton nachgeführt. Diese vorzugsweise nichtlineare Funktion kann eine e-Funktion sein:

a) $P = P_{max} * e^{-at}$ für den Druckabbau

b) $P = P_{max} (1 - e^{-at})$ für den Druckaufbau
wobei $P_{max}$ der durch eine Druckmittelspeisequelle bestimmte maximal mögliche Druck ist,
e die Eulersche Zahl (1,7182818284),
t die Zeit und
a ein Parameter der e-Funktion ist. Dieser Parameter wird durch Randbedingungen der Bremsanlage wie z.B. Leitungsquerschnitte, Volumen der Leitungen und Bremszylinder, Ventilquerschnitte etc. bestimmt.

Ermittelt man auf diese Weise ein Maß für die Bremsdrücke der beiden Vorderräder, so stellt die Differenz dieser Drücke ein Maß für das existierende Giermoment dar. Da zur Begrenzung des Giermomentes nur diese Differenz berücksichtigt wird, müssen die so ermittelten Drücke nicht notwendigerweise mit den tatsächlichen Bremszylinderdrücken identisch sein.

Die Giermomentbegrenzung nimmt nach einem weiteren Merkmal der Erfindung Einfluß auf das Rad, das sich auf dem guten Haftwert befindet. Das Rad auf dem "schlechten" Haftwert wird dagegen nur durch die Blockierschutzfunktion geregelt. Nach der Erfindung wird daher in einer Auswahlschaltung überprüft, welches der beiden überwachten Räder mit dem höheren und welches mit dem niedrigeren Bremsdruck beaufschlagt ist. Das Rad mit dem niedrigeren Bremsdruck ist dabei das Rad auf dem "schlechten" Haftwert. Die Giermomentbegrenzung steuert den Bremszylinderdruck des Rades auf dem guten Haftwert nach einer Funktion, die den zeitlichen Verlauf der Differenz der Bremszylinderbrücke vorgibt.

Nach einer Ausgestaltung der Erfindung ist die vorstehend erwähnte, den zeitlichen Verlauf der Differenz der Bremszylinderdrücke vorgebende Funktion eine zeitlich ansteigende Rampenfunktion, die in einem Maximalwert endet. Diese Rampenfunktion startet bei der ersten Blockierschutzauslösung auf dem Wert "0" und steigt dann an, damit der Fahrer Zeit hat, gegenzulenken. Erst nach einer fest vorgegebenen Zeit wird der maximal mögliche Differenzdruck und damit das maximal mögliche Giermoment erreicht. Wenn die Blockierschutzfunktion unwirksam ist, so ist natürlich auch die Giermomentbegrenzung abgeschaltet.

Weiterhin wird bei der Erzeugung der Rampenfunktion nur dann eine Vergrößerung bzw. eine Inkrementierung des zulässigen Differenzwertes vorgenommen, wenn der maximal zulässige Differenzdruck noch nicht erreicht ist und wenn im vorherigen Zeittakt die Giermomentbegrenzungsfunktion aktiv war.

Die Rampenfunktion wird in einem Regelkreis als Sollwert für den zulässigen Differenzdruck verwendet. Der aus dem ersten Funktionsgenerator stammende Differenzwert der fiktiven Drücke stellt den Istwert dar. Aus der Differenz dieser beiden Größen wird dann eine Regelabweichung gebildet. Um ein zu häufiges Schalten der Ventile zu vermeiden, wird noch ein Toleranzband vorgegeben, innerhalb dessen sich die Regelabweichung bewegen darf, ohne daß die Ventilstellung geändert wird.

Ist der Unterschied der Haftwerte zwischen linkem und rechtem Vorderrad relativ klein und wird das Rad auf dem besseren Haftwert nur nach der beschriebenen Rampenfunktion geregelt, so kann es vorkommen, daß dieses Rad blockiert, da der durch die Giermomentbegrenzung vorgegebene Bremsdruck an diesem Rad größer werden kann, als der Druck, der sich aus der Blockierschutzfunktion für dieses Rad ergibt. Um dieses Blockieren zu vermeiden, wird jede von der Giermomentbegrenzung vorgegebene Ventilstellung mit dem "Ventilstellungswunsch" der Blockierschutzregelung für dieses Rad verglichen. In Abhängigkeit von diesem Vergleich wird festgelegt, daß die Giermomentbegrenzung die Ventilstellungsanforderung der Blockierschutzfunktion nur zum Zwecke der Bremsdruckreduzierung beeinflußen kann. Ergibt sich aus der Blockierschutzfunktion der Befehl nach einem Druckabbau, so wird dieser Befehl an die Ventile ausgegeben. Fordert die Blockierschutzfunktion dagegen ein Druckhalten und die Giermomentbegrenzungsfunkton ein Druckanheben, so hat ebenfalls die Blockierschutzfunktion Vorrang.

Im folgenden wird die Erfindung anhand eines Ausführungsbeispieles im Zusammenhang mit der Zeichnung ausführlicher erläutert. Es zeigt:

Fig.1 ein Beispiel des zeitlichen Verlaufes des geschätzten Bremsdruckes in Abhängigkeit von Ventilstellungen;

Fig.2 den zeitlichen Verlauf des zulässigen Differenzdruckes zwischen rechten und linkem Fahrzeugrad;

Fig.3 den zeitlichen Verlauf der Bremsdrücke zweier Räder während einer blockiergeschützten Bremsung bei wirksamer Giermomentbegrenzung;

Fig.4 ein Blockschaltbild eines Ausführungsbeispieles der für die Giermomentbegrenzung eingesetzten Baugruppen der blockiergeschützten Bremsanlage.

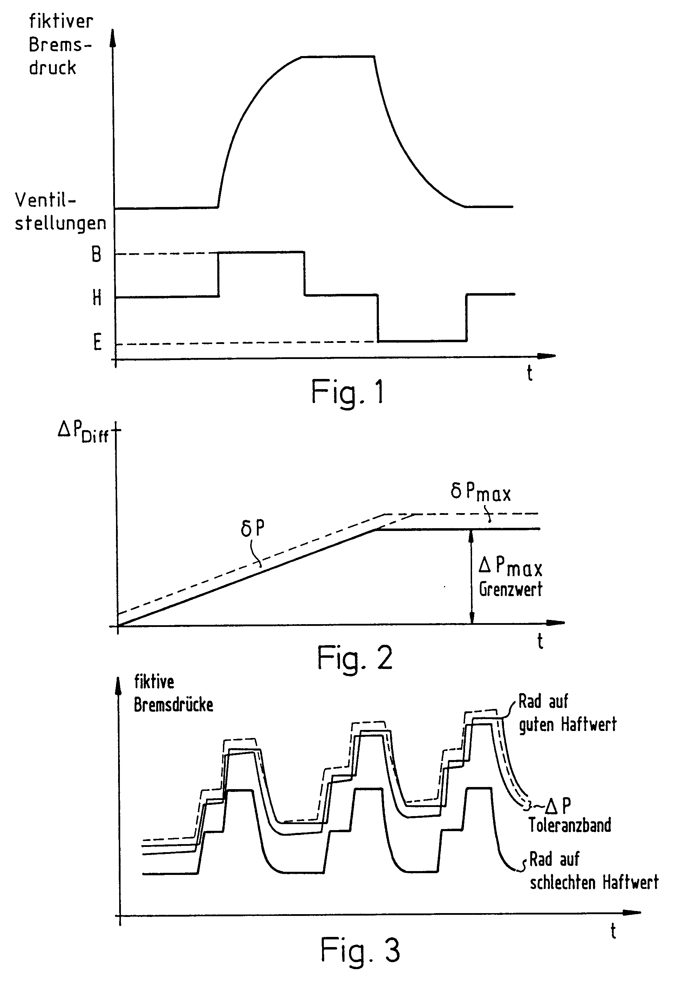

Im Zusammenhang mit Fig. 1 wird erläutert, wie anhand der Dauer möglicher Ventilstellungen ein physikalischer Wert ermittelt wird, der in guter Näherung den tatsächlich in den jeweiligen Bremszylindern herrschenden Bremsdruck repräsentiert. Die möglichen Ventilstellungen "Entlüften", "Druckhalten" bzw. "Belüften" sind mit den Buchstaben "E", "H" bzw. "B" bezeichnet. Ihnen sind folgende logischen Pegel bzw. Zahlenwerte zugeordnet: E = 0; H = 1 und B = 2. Solange das Ventil in der Stellung "Druckhalten" ist, bleibt der Bremsdruck konstant. Ist das Ventil in der Stellung "Belüften", so steigt der Druck im zugehörigen Bremszylinder nach einer nicht-linearen Funktion, die mathematisch eine e-Funktion ist ($P_{max} * e^{-}$

at),an, wobei die Parameter dieser e-Funktion aufgrund der Konfiguration der Bremsanlage, wie z.B. Leitungsquerschnitte, Ventilquerschnitte, Volumen des Bremszylinders usw., ermittelbar sind. Kennt man diese Parameter und den Druck einer die Anlage speisenden Druckluftquelle, so kann man aus der Öffnungszeit des Ventiles die während dieser Öffnungszeit stattfindende Druckänderung bestimmen. Gleiches gilt für das Entlüften, bei dem der Druck im Bremszylinder ebenfalls nach einer e-Funktion abfällt.

Auf diese Weise kann man also aus der zeitlichen Dauer der verschiedenen Ventilzustände (Entlüften, Halten und Belüften) den Verlauf des Bremsdruckes sehr genau ermitteln, ohne den Druck selbst direkt zu messen. Der so ermittelte Bremsdruck wird als "fiktiver Bremsdruck" bezeichnet und als Ist-Wert für die Regelung verwendet.

Die Differenz der fiktiven Bremsdrücke der Vorderräder stellt ein Maß für das existierende Giermoment dar. Da zur Begrenzung des Giermomentes nur diese Differenz berücksichtigt wird, müssen die fiktiven Drücke nicht notwendigerweise mit den exakten tatsächlichen Bremszylinderdrücken übereinstimmen. Die Giermomentbegrenzung nimmt auf das Rad, das sich auf "gutem" Haftwert befindet, Einfluß, während das Rad auf dem "schlechten" Haftwert durch die Giermomentbegrenzung nicht beeinflußt wird. Es wird vielmehr durch eine Individualregelung entsprechend den Vorgaben des Blockierschutzteiles der Bremsanlage geregelt.

Fig. 2 zeigt den zeitlichen Verlauf der durch die Regelung zugelassenen Differenz der fiktiven Drücke der Vorderräder. Als zweckmäßig hat sich eine Rampenfunktion, die in einem Maximalwert $\delta P_{max}$ endet, erwiesen. Es sind jedoch auch andere Verläufe denkbar. Zu Beginn einer Blockierschutzregelung ist die zulässige Differenz der fiktiven Drücke auf "0" festgelegt, damit der Fahrer keinen "Schlag" auf die Lenkung erhält. Diese zulässige Differenz steigt bei der Rampenfunktion der Fig. 2 linear an, wobei die Steilheit dieser "Rampenfunktion" so gewählt ist, daß der Fahrer ausreichend Zeit hat, gegenzulenken. Die Rampenfunktion mündet dann in einen Grenzwert, der die maximal zulässige Differenz der fiktiven Drücke der Vorderräder beschreibt. Die Funktion hat ihren zeitlichen Nullpunkt bei Beginn der ABS-Funktion. Gemäß

$$P_{gut\ soll} = P_{schlecht} + \delta P$$

errechnet sich der momentane Sollwert des Druckes des Rades auf dem "guten" Haftwert. Durch Vergleich mit dem fiktiven Druck dieses Rades ergibt sich die auszugebende Ventilstellung. Um ein ständiges Be- und Entlüften zu vermeiden, wird noch ein Toleranzband definiert, das in Fig. 2 durch die gestrichelte Linie dargestellt ist. Daraus ergeben sich folgende Beziehungen für die Regelung, die auch in Fig. 3 dargestellt sind:

Fall 1: $P_{gut\ soll} > P_{gut\ fiktiv}$ + Toleranzband = > entlüften
Fall 2: $P_{gut\ soll} < P_{gut\ fiktiv}$ + Toleranzband
und
$P_{gut\ soll} > P_{gut\ fiktiv}$ = > halten
Fall 3: $P_{gut\ soll} < P_{gut\ fiktiv}$ = > belüften.

Aus Fig. 3 sieht man, wie die zulässige Druckdifferenz zwischen dem Rad auf schlechtem Haftwert und dem Rad auf gutem Haftwert langsam ansteigt.

Sind die Haftwerte für das linke und das rechte Rad relativ nah beieinander und regelt man das Rad, das sich auf dem guten Haftwert befindet, nur gemäß der Giermomentbegrenzungsfunktion, die den Bremsdruck für das Rad auf gutem Haftwert ja auf das Rad mit dem schlechten Haftwert bezieht, so könnte der Bremsdruck am Rad auf dem guten Haftwert so groß werden, daß ein Blockieren des Rades auf dem guten Haftwert auftritt. Um dies zu vermeiden, wird jede Ventilstellung, die das Giermoment erzeugt, mit den Steuerbefehlen der Blockierschutzregelung verglichen, wobei diejenigen von der Blockierschutzfunktion stammenden Befehle, die eine weitere Druckerhöhung verbieten, d. h. die Befehle "Druckhalten" und "Entlüften" Vorrang vor Befehlen der Giermomentbegrenzung haben.

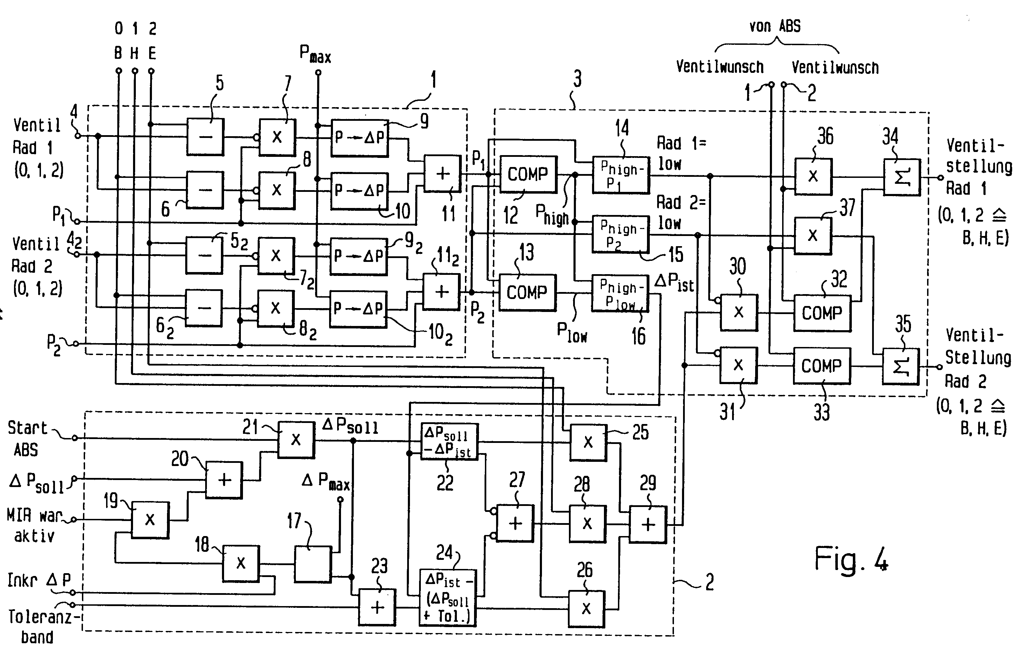

Fig. 4 zeigt ein Blockschaltbild der für die Giermomentbegrenzung verwendeten Komponenten. Der Block 1 hat dabei die Funktion, aus den Ventilstellungen Signale für die fiktiven Drücke der überwachten Räder zu erzeugen. Der Block 2 erzeugt die "Rampenfunktion" bzw. die Funktion für die zulässigen Druckdifferenzen. Der Block 3 ermittelt, welches der beiden Räder den höheren und welches den niedrigeren Druck hat und bestimmt aus dieser Überprüfung und der Überprüfung der Anforderungen der Blockierschutzregelung unter Berücksichtigung der Ausgangssignale des Blockes 2 die Ventilstellungen der beiden Räder.

Einem Eingang 4 des Blockes 1 wird ein Signal zugeführt, das die momentane Stellung eines ersten Ventiles wiedergibt. Dieses Signal kann drei unterschiedliche Zustände einnehmen, nämlich den Wert "0" für Belüften, den Wert "1" für Druckhalten und den Wert "2" für Entlüften. Diese Signale werden zwei Subtrahierern 5 und 6 zugeführt, wo sie von den festen Werten "2" bzw. "0" subtrahiert werden. Die Ausgangssignale der Subtrahierer 5 und 6 werden invertiert, dergestalt, daß das invertierte Signal die Zustände "0" oder "1" annehmen kann. Ist die Stellung des Ventiles 1 auf Entlüften (Wert "2"), so ist das Ausgangssignal des Subtrahierers 5 auf dem Wert "0" und damit das invertierte Signal auf dem Wert "1". Hat dagegen das Signal für die Ventilstellungen die Werte "1" oder "2", so wird das invertierte Ausgangssignal des Subtrahierers zu einer "0". Umgekehrt ist das invertierte Ausgangssignal des Subtrahierers 6 nur dann auf dem Wert "1", wenn das Ventil 1 in der Stellung "Belüften" (Wert "0") ist. Die beiden invertierten Ausgangssignale der Subtrahierer 5 und 6 werden Torschaltungen 7 bzw. 8 zugeleitet, die nur dann öffnen und damit ein Signal an ihrem anderen Eingang durchlassen, wenn die "Torsteuersignale" auf einer "1" sind. Diese Torschaltkreise 7 und 8 sind hier als Multiplizierer dargestellt. Den anderen Eingängen der Torschaltkreise 7 und 8 wird jeweils der Wert des fiktiven Druckes $P_1$ am Ventil 1, der im vorherigen Zeittakt ermittelt wurde, zugeführt. Steht das Ventil 1 in der Stellung "Entlüften", so wird also dieser Wert $P_1$ als Anfangswert einem Funktionsgenerator 9 zugeführt, der aus diesem Anfangswert den abfallenden Ast der e-Funktion (Fig. 1) ermittelt und an seinem Ausgang einen Wert $\delta P$ ausgibt, der ein Maß für die Druckänderung für den Druckabbau während des letzten Zeittaktes ist. In analoger Weise wird das Ausgangssignal des Torschaltkreises 8 einem Funktionsgenerator 10 zugeführt, der die entsprechende Druckänderung für ansteigende Drücke bestimmt. Am Ende eines Zeittaktes kann höchstens einer der beiden Funktionsgeneratoren 9 oder 10 ein von "0" verschiedenes Ausgangssignal führen. Dieses Ausgangssignal wird einem Addierer 11 zugeführt, in welchem der jeweilige Wert $\delta P$ vorzeichenrichtig zu dem Wert $P_1$ des vorherigen Zeittaktes addiert wird. Am Ausgang des Addierers 11 steht damit ein Signal an, das dem fiktiven Druck im Ventil 1 entspricht. Steht das Ventil 1 in der Stellung "Druckhalten", so sind die Ausgangssignale beider Torschaltkreise 7 und 8 auf "0", so daß die Funktionsgeneratoren 9 und 10 unwirksam sind und der Druck $P_1$ zum vorherigen Zeittakt als neuer Druck zum aktuellen Zeittakt übernommen wird. Beiden Funktionsgeneratoren 9 und 10 wird auch noch ein Festwert für den bekannten maximalen Druck $P_{max}$ der speisenden Druckluftquelle eingegeben.

In gleicher Weise wird der fiktive Druck $P_2$ für das zweite Ventil ermittelt, wobei die entsprechenden Bauteile mit dem gleichen Bezugszeichen jedoch dem Index 2 bezeichnet sind. Die Werte der beiden fiktiven Drücke $P_1$ und $P_2$ werden einerseits in nicht dargestellten Pufferspeichern zwischengespeichert und den Eingängen für die fiktiven Druckwerte des vorherigen Zeittaktes zugeführt. Weiterhin werden sie Eingängen des Blockes 3 zugeführt.

Im Block 3 wird zunächst ermittelt, welches der beiden Räder den höheren und welches den niedrigeren fiktiven Druck führt. Hierzu werden die beiden fiktiven Drücke $P_1$ und $P_2$ einem Maximalwert-Schaltkreis 12 und einem Minimalwert-Schaltkreis 13 zugeführt. Der Maximalwert-Schaltkreis gibt an seinem Ausgang den Wert des größeren seiner beiden Eingangssignale aus, das also dem höheren Druck $P_{high}$ der beiden Drücke $P_1$ und $P_2$ entspricht. Entsprechend gibt der Minimalwert-Schaltkreis 13 an seinem Ausgang den niedrigeren Wert seiner beiden Eingangssignale aus, also den Wert des niedrigeren Druckes $P_{low}$. In Subtrahierern 14 und 15 wird überprüft, welches der beiden Räder den höheren Druck führt. Hierzu werden die Differenzen $P_{high}$ minus $P_1$ und $P_{high}$ minus $P_2$ gebildet und das Vorzeichen des Differenzwertes ermittelt. Am Ausgang des Subtrahierers 14 steht somit dann der Wert "1", wenn das Rad 1 den niedrigeren Druck führt und der Wert "0", wenn dieses Rad den höheren Druck führt. Entsprechend steht am Ausgang des Subtrahierers 2 der Wert "1", wenn das Rad 2 den niedrigeren Druck führt und der Wert "0", wenn das Rad 2 den höheren Druck führt.

In einem weiteren Subtrahierer 16 wird der Differenzwert $P_{ist}$ der beiden Drücke $P_1$ und $P_2$ bzw. $P_{high}$ und $P_{low}$ ermittelt. Dieser Differenzwert wird dem Block 2 zugeführt.

Der Block 2 bestimmt die Funktion des Zeitverlaufes des für die Giermomentbegrenzung zugelassenen Differenzdruckes. Fig. 4 zeigt das Ausführungsbeispiel mit der Rampenfunktion gemäß Fig. 2. Diese Rampenfunktion $\delta P_{soll}$ darf dann ansteigen, wenn folgende Bedingungen erfüllt sind:

1. Der Blockierschutz soll angesprochen haben;
2. die Giermomentbegrenzung muß im vorherigen Zeittakt wirksam gewesen sein;
3. der maximal zulässige Differenzdruck $\delta P_{max}$ darf noch nicht erreicht sein.

Im Blockschaltbild der Fig. 4 sind diese Funktionen wie folgt realisiert:

In einem Komparator 17 wird überprüft, ob der maximal zulässige Differenzdruckwert $\delta P_{max}$ noch größer als der aktuelle Differenzdruckwert $\delta P_{soll}$ ist. Ist dies der Fall, so wird der Wert "1" ausgegeben, der eine Torschaltung 18, die auch hier als Multiplizierer dargestellt ist, öffnet. Diese Torschaltung läßt dann einen Inkrementwert $\delta P$ durch, um den die Rampenfunktion im nächsten Zeittakt ansteigen soll. Dieser Wert wird dann durch eine weitere Torschaltung 19 durchgelassen, wenn an deren Steuereingang ein Signal (logische "1") anliegt, das anzeigt, daß im vorhergehenden Takt die Giermomentbegrenzung aktiv war (dieses Signal stammt, wie später noch erläutert wird, von Komparatoren 32 bzw. 33). In einem Addierer 20 wird dann der Inkrementwert zu dem Wert $P_{soll}$ zum vorherigen Zeittakt addiert, womit sich der neue Sollwert für den Differenzdruck $\delta P_{soll}$ ergibt. Dieser Wert wird dann durch eine weitere Torschaltung 21 durchgelassen, wenn eine Blockierschutzauslösung stattgefunden hat.

Der aktuelle Wert des zulässigen Differenzdruckes $\delta P_{soll}$ wird in einem Vergleicher 22 mit dem fiktiven Differenzdruckwert $\delta P_{ist}$ verglichen, wobei der Ausgang des Vergleichers 22 die Werte "0" und "1" annehmen kann. Ist die Differenz $\delta P_{soll}$ minus $\delta P_{ist}$ negativ, so führt der Ausgang des Komparators 22 den Wert "0"; ist er positiv, so ist der Ausgangswert "1".

Zur Vermeidung eines zu häufigen Schaltens der Ventile wird der Rampenfunktion noch ein Toleranzband superponiert. Ein die Breite dieses Toleranzbandes bestimmender Wert wird in einem Addierer 23 dem aktuellen Sollwert $P_{soll}$ hinzuaddiert, worauf dann in einem Vergleicher 24, der entsprechend dem Vergleicher 22 aufgebaut ist, das Vorzeichen der Differenz $\delta P_{Ist}$ - ($\delta P_{soll}$ + TOL) bestimmt wird, wobei der Wert TOL der Wert für die Breite des Toleranzbandes ist. Ist diese Differenz negativ, so ist das Ausgangssignal des Komparators 24 eine "0"; ist sie positiv, so ist der Ausgangswert des Komparators 24 eine "1".

In der den Komparatoren 22 und 24 folgenden Schaltung wird festgelegt, welche Ventilstellung die Giermomentbegrenzung anfordert. Hierzu sind drei Multiplizierer 25, 26 und 28 gezeigt, wobei die Darstellung lediglich zum besseren Verständnis so gewählt wurde und in der Praxis der Multiplizierer 25 fortgelassen werden kann. Dem Multiplizierer 25 wird nämlich an seinem einen Eingang der Festwert "0" zugeführt, so daß sein Ausgang unabhängig vom Ausgang des Komparators 22 immer eine "0" für die Anforderung "Belüften" führt.

Der Multiplizierer 26 hat an seinem einen Eingang den Festwert 2 (für Entlüften), so daß an seinem Ausgang je nach Wert des Ausganges des Komparators 24 eine "0" oder eine "2" erscheinen kann.

Die Ausgangssignale der Komparatoren 22 und 24 werden weiterhin invertiert und dann in einem UND-Gatter 27 verknüpft. Das Ausgangssignal dieses UND-Gatters 27 ist dann auf einer "1", wenn der fiktive Differenzdruck $P_{Ist}$ sich in dem Toleranzband befindet. Ist er dagegen außerhalb des Toleranzbandes, so führt der Ausgang des UND-Gatters 27 eine "0". Der Ausgang des UND-Gatters 27 wird mit dem Festwert "1" im Multiplizierer 28 multipliziert, so daß der Ausgang des Multiplizierers 28 entweder eine "0" oder eine "1" führen kann. Die drei Ausgänge der Multiplizierer 25, 26 und 28 werden einem Maximalwert-Schaltkreis 29 zugeführt, der den größten seiner drei Eingangswerte auswählt und an seinem Ausgang ausgibt. Bei der gewählten Zuordnung für die Werte "0", "1" und "2" heißt dies also, daß die Anforderung "Entlüften" Vorrang vor "Halten" und "Belüften" hat und daß die Anforderung "Halten" Vorrang vor "Belüften" hat.

Die von der Rampenfunktion (Block 2) stammende Anforderung für die Ventilstellung wird dann dem Block 3 zugeführt, wo diese Anforderung an das Ventil weitergeleitet wird, das den höheren Druck $P_{high}$ führt. Hierzu wird der Ausgang des Maximalwert-Schaltkreises 29 zwei Torschaltungen 30 und 31 zugeführt, deren Steuereingängen die Ausgänge der Komparatoren 14 und 15 zugeführt werden. Da die Steuereingänge der Torschaltungen 30 und 31 invertiert sind, läßt also die Torschaltung 30 das von der Rampenfunktion stammende Anforderungssignal für die Ventilstellung dann zum Ventil 1 durch, wenn das Rad 1 den höheren Druck der beiden Vorderräder hat. Entsprechend läßt die Torschaltung 31 das Anforderungssignal zum Ventil 2 durch, wenn dieses den höheren der beiden Drücke hat.

Um zu verhindern, daß durch die Rampenfunktion der Giermomentbegrenzung das Rad auf dem besseren Haftwert blockiert, werden die aus den Torschaltungen 30 und 31 stammenden Anforderungssignale für die Ventilstellungen in Komparatoren 32 und 33 noch mit Anforderungssignalen für die Ventilstellung verglichen, die von der Blockierschutzregelung stammen. Diese Komparatoren 32 und 33 sind hier im Prinzip wiederum Maximalwert-Schaltkreise, die den Maximalwert ihrer beiden Eingangssignale an den Ausgang durchgeben. Fordert also beispielsweise die Blockierschutzfunktion ein Entlüften (Wert 2), während die Giermomentbegrenzung ein Halten oder Belüften (Werte 1 oder 0) anfordert, so hat das Entlüften stets Vorrang. Analoges gilt für die Blockierschutzanforderung "Halten" im Verhältnis zur Giermomentbegrenzungsanforderung "Belüften".

Die Ausgangssignale der Komparatoren 32 und 33 werden Addierern 34 bzw. 35 zugeführt, deren Ausgangssignale die Ventile für das Rad 1 bzw. das Rad 2 ansteuern. Den anderen Eingängen der Addierer 34 bzw. 35 werden Ausgangssignale von Torschaltkreisen 36 bzw. 37 zugeführt, die durch die Ausgangssignale der Komparatoren 14 bzw. 15 gesteuert werden. Dasjenige Rad, dessen Bremszylinder den niedrigeren Druck hat, öffnet eine der beiden Torschaltungen 36 oder 37, so daß das vom Blockierschutzregelkreis stammende Anforderungssignal für die Ventilstellung zu dem zugehörigen Addierer 34 oder 35 durchgelassen wird. Damit ist also sichergestellt daß das Rad auf dem schlechteren Haftwert, das den geringeren Bremszylinderdruck hat, durch die Blockierschutzfunktion geregelt wird, während das andere Rad durch die Giermomentbegrenzung geregelt wird mit der Einschränkung, daß auch für dieses Rad die Blockierschutzfunktion bei gewissen Betriebszuständen, die von den Komparatoren 32 und 33 bestimmt werden, Vorrang hat.

**Patentansprüche**

1. Blockiergeschützte Bremsanlage mit Giermomentbegrenzung, bei der die Differenz der Bremsdrücke in den Radbremszylindern von linkem und rechtem Vorderrad auf einen vorgegebenen Maximalwert ($\delta P_{max}$) begrenzt ist, dadurch gekennzeichnet, daß ein erster Funktionsgenerator (1) vorgesehen ist, dessem Eingang ein Signal (0, 1, 2) zugeführt wird, das die Stellung der die überwachten Radbremszylinder steuernden Ventile repräsentiert, wobei der Funktionsgenerator (1) aus dem zeitlichen Verlauf dieses Signales nach einer vorgegebenen Funktion dem Bremsdruck in den jeweiligen Radbremszylindern entsprechende Ausgangssignale ($P_1$, $P_2$) erzeugt, welche zum Zwecke der Giermomentbegrenzung einer Auswahlschaltung (3) zugeführt werden, die ermittelt, welches der beiden überwachten Räder mit dem höheren ($P_{high}$) und welches mit dem niedrigeren ($P_{low}$) Bremsdruck beaufschlagt ist und die weiterhin den Differenzwert ($\delta P_{ist}$) zwischen dem höheren und dem niedrigeren Bremsdruck ermittelt, wobei dieser Differenzwert einem zweiten Funktionsgenerator (2) zugeführt wird, der nach einer weiteren vorgegebenen Funkton einen Wert der zulässigen Differenz der Bremsdrücke in den Radbremszylindern bestimmt, wobei die Auswahlschaltung (3) das Ausgangssignal des zweiten Funktionsgenerators (2) nur zu dem Ventil desjenigen Rades durchläßt, das den höheren der beiden Bremsdrücke führt.

2. Blockiergeschützte Bremsanlage nach Anspruch 1, dadurch gekennzeichnet, daß die vorgegebene Funktion des ersten Funktionsgenerators (1) eine e-Funktion ist.

3. Blockiergeschützte Bremsanlage nach Anspruch 2, dadurch gekennzeichnet, daß der zweite Funktionsgenerator (2) ein Signal ($\delta P_{soll}$) erzeugt, das einen Sollwert für die zulässige Differenz der Bremsdrücke darstellt, wobei die vorgegebene Funkton des zweiten Funktionsgenerators (2) eine zeitlich ansteigende Rampenfunktion ist, die in einen konstanten Maximalwert ($\delta P_{max}$) mündet.

4. Blockiergeschützte Bremsanlage nach Anspruch 3, dadurch gekennzeichnet, daß der zweite Funktionsgenerator (2) Einrichtungen (21) enthält, die den Funktionsgenerator (2) nur dann wirksam schalten, wenn die Blockierschutzfunktion der Bremsanlage aktiv ist.

5. Blockiergeschützte Bremsanlage nach Anspruch 4, dadurch gekennzeichnet, daß die Rampenfunktion des zweiten Funktionsgenerators bei dem Wert "0" beginnt und daß Einrichtungen (17-20) vorgesehen sind, die ein Anwachsen der Rampenfunktion nur dann zulassen, wenn
   a) der maximal zulässige Differenzdruck ($\delta P_{max}$) noch nicht erreicht ist und
   b) die Giermomentbegrenzungsfunktion im vorherigen Zeittakt aktiv war.

6. Blockiergeschützte Bremsanlage nach Anspruch 5, dadurch gekennzeichnet, daß der zweite Funktionsgenerator zusätzlich Einrichtungen (22-29) enthält, die den tatsächlichen Differenzdruck ($\delta P_{ist}$) mit dem zulässigen Differenzdruck ($\delta P_{soll}$) vergleichen und die weiterhin überprüfen, ob der Vergleichswert innerhalb eines vorgegebenen Toleranzbandes liegt, wobei in Abhängigkeit hiervon ein Steuersignal für das durch die Giermomentbegrenzungsfunktion zu betätigende Ventil erzeugt wird.

7. Blockiergeschützte Bremsanlage nach Anspruch 6, dadurch gekennzeichnet, daß das Steuersignal für das durch die Giermomentbegrenzungsfunktion zu betätigende Ventil in einem Vergleicher (32, 33) mit einem von der Blockierschutzfunktion stammenden Ventilsteuersignal verglichen wird, wobei in Abhängigkeit von diesem Vergleich ein von der Blockierschutzfunktion stammendes Signal für Entlüften oder Druckabsenken stets Vorrang vor den von der Giermomentbegrenzungsfunktion stammenden Signalen hat und wobei ein von der Blockierschutzfunktion stammendes Ventilsteuersignal für Druckhalten Vorrang vor einem von der Giermomentbegrenzungsfunktion stammenden Signal für "Belüften" bzw. "Druckerhöhen" hat.

## Claims

1. Anti-lock braking system with limited yawing movement, in which the difference in brake pressures in the wheel brake cylinders of the left and right-hand front wheel is limited to a predetermined maximum value ($\delta P_{max}$), characterised in that a first function generator (1) is provided, to the input of which a signal (0, 1, 2) is supplied which represents the position of the valves controlling the wheel brake cylinders monitored, the function generator (1) producing output signals ($P_1$, $P_2$), corresponding to the brake pressure in the respective wheel brake cylinders, from the variation with time of the said signal according to a predetermined function, the signals being fed, for the purpose of limiting yawing movement, to a selection circuit (3) which determines which of the two monitored wheels is acted on by the higher ($P_{high}$) brake pressure and which by the lower ($P_{low}$) brake pressure and which furthermore determines the differential value ($\delta P_{ist}$) between the higher and the lower brake pressure, this differential value being fed to a second function generator (2) which determines a value of the permissible difference in the brake pressures in the wheel brake cylinders according to a further predetermined function, the selection circuit (3) letting through the output signal of the second function generator (2) only to the valve of the wheel which carries the higher of the two brake pressures.

2. Anti-lock braking system according to claim 1, characterised in that the predetermined function of the first function generator (1) is an e-function.

3. Anti-lock braking system according to claim 2, characterised in that the second function generator (2) produces a signal ($\delta P_{soll}$) which represents a desired value for the permissible difference in the brake pressures, the predetermined function of the second function generator (2) being a ramp function, increasing with time, which merges into a constant maximum value ($\delta P_{max}$).

4. Anti-lock braking system according to claim 3, characterised in that the second function generator (2) contains devices (21) which effectively connect the function generator (2) only when the anti-lock function of the braking system is active.

5. Anti-lock braking system according to claim 4, characterised in that the ramp function of the second function generator begins at the value "0" and in that devices (17 to 20) are provided which allow an increase in the ramp function only when
   a) the maximum permissible differential pressure ($\delta P_{max}$) has not yet been achieved and
   b) the yawing movement limiting function was active in the previous time cycle.

6. Anti-lock braking system according to claim 5, characterised in that the second function generator additionally contains devices (22 to 29) which compare the actual differential pressure ($\delta P_{ist}$) with the permissible differential pressure ($\delta P_{soll}$) and which also examine whether the comparative value is within a predetermined tolerance band, a control signal dependent on this being produced for the valve to be actuated by the yawing movement limiting function.

7. Anti-lock braking system according to claim 6, characterised in that the control signal for the valve to be actuated by the yawing movement limiting function is compared in a comparator (32, 33) with a valve control signal coming from the anti-lock function, wherein a signal, dependent on this comparison and coming from the anti-lock function, for ventilating or pressure-reduction always has precedence over the signals coming from the yawing movement limiting function, and a valve control signal coming from the anti-lock function for maintaining pressure has precedence over the yawing movement limiting function for "air application" or "pressure-increase".

**Revendications**

1. Installation de freinage à protection contre l'enrayage et à moment de lacet ou d'embardée, dans laquelle la différence des pression de freinage dans les cylindres de frein de la roue antérieure gauche et droite est limitée à une valeur maxima prédéterminée ($\delta P_{max}$), caractérisée par le fait qu'il est prévu un premier générateur de fonction (1) à l'entrée duquel est appliqué un signal (0, 1, 2) qui représente la position des soupapes qui contrôlent les cylindres de frein des roues, ledit générateur de fonction (1) produisant, à partir de l'allure temporelle de ce signal et suivant une fonction prédéterminée, des signaux de sortie ($P_1$, $P_2$) qui correspondent à la pression de freinage qui règne respectivement dans les cylindres de frein des roues et qui sont appliqués, dans le but de limiter le moment de lacet, à un circuit de sélection (3) qui détermine celle des deux roues contrôlées qui est chargée avec la pression de freinage élevée ($P_{high}$) et celle des deux roues qui est chargée avec la pression de freinage basse ($P_{low}$), et qui, en outre, détermine la différence de pression ($\delta p_{ist}$) entre la pression de freinage élevée et la pression de freinage basse, la différence de pression étant appliquée à un second générateur de fonction (2) qui détermine, suivant une seconde fonction prédéterminée, une valeur de la différence admissible des deux pressions de freinage dans le cylindre de frein des roues, la réalisation étant telle que le circuit de sélection (3) ne laissant passer le signal de sortie du second générateur de fonction (2) que vers la soupape de celle des roues, dans laquelle règne la plus élevée des pressions de freinage.

2. Installation de freinage à protection contre l'enrayage selon la revendication 1, caractérisée par le fait que la fonction prédéterminée du premier générateur -de fonction (1) est une fonction en e.

3. Installation de freinage à protection contre l'enrayage selon la revendication 2, caractérisée par le fait que le second générateur de fonction (2) produit un signal ($\delta P_{soll}$) qui représente une valeur de consigne pour la différence admissible des deux pressions de freinage, la fonction prédéterminée du second générateur de fonction (2) étant une fonction en rampe qui croît dans le temps et qui débouche en une valeur maximale constante ($\delta P_{max}$).

4. Installation de freinage à protection contre l'enrayage selon la revendication 3, caractérisée par le fait que le second générateur de fonction (R) comporte des dispositifs (21) qui ne commutent le générateur de fonction (2) dans son état actif ou efficace que lorsque la fonction de protection contre l'enrayage de l'installation de freinage est active.

5. Installation de freinage à protection contre l'enrayage selon la revendication 4, caractérisée par le fait que la fonction en rampe du second générateur de fonction commence avec la valeur "0", et que des dispositifs (17, 20) sont prévus qui n'autorisent une croissance de la fonction en rampe que si :

a) la différence de pression maximale admissible ($\delta P_{max}$) n'est pas encore atteinte ;

b) la fonction de limitation du moment de lacet n'a pas été activée dans la cadence antérieure.

6. Installation de freinage à protection contre l'enrayage selon la revendication 5, caractérisée par le fait que le second générateur de fonction comporte, en plus, des dispositifs (22, 29) qui comparent la différence de pression effective ($\delta P_{ist}$) avec la différence de pression admissible ($\delta P_{soll}$) et qui, de plus, vérifient si la valeur comparative se situe à l'intérieur d'une bande de tolérance prédéterminée, la réalisation étant telle, qu'en fonction de ce qui précède, un signal de commande est produit pour la soupape qui est à actionner par la fonction de limitation du moment de lacet.

7. Installation de freinage à protection contre l'enrayage selon la revendication 6, caractérisée par le fait que le signal de commande pour la soupape à actionner par la fonction de limitation du moment de lacet, est comparé dans un comparateur (32, 33) avec un signal de commande de soupape provenant de la fonction de protection contre l'enrayage, la réalisation étant telle qu'en fonction de cette comparaison un signal provenant de la fonction de protection contre l'enrayage et assurant la désaération ou la baisse de la pression est prioritaire par rapport aux signaux provenant de la fonction de limitation du moment de lacet, alors qu'un signal de commande de soupape provenant de la fonction de protection contre l'enrayage et assurant le maintien de la pression, est prioritaire par rapport à un signal provenant de la fonction de limitation du moment de lacet et assurant "l'aération" ou "l'accroissement" de la pression.

fiktiver
Bremsdruck

Ventilstellungen

B

H

E

t

## Fig. 1

$\Delta P_{Diff}$

$\delta P_{max}$

$\delta P$

$\Delta P_{max}$
Grenzwert

t

## Fig. 2

fiktive
Bremsdrücke

Rad auf
guten Haftwert

$\Delta P$
Toleranzband

Rad auf
schlechten Haftwert

t

## Fig. 3

Fig. 4